# EUROPÄISCHE PATENTSCHRIFT

(11) **EP 1 897 660 B1**
(45) Veröffentlichungstag und Bekanntmachung des Hinweises auf die Patenterteilung: **29.05.2013**
(21) Anmeldenummer: 07007957.9
(22) Anmeldetag: 19.04.2007
(51) Int. Cl.: B25B 27/30, F16F 1/12

(54) **Greifelement für einen Federspanner und Federspanner**
Gripping element for a spring tensioner and spring tensioner
Elément de prise pour un tendeur à ressort et tendeur à ressort

(30) Priorität: 17.08.2006 DE 202006012655 U
(43) Veröffentlichungstag der Anmeldung: 12.03.2008
(73) Patentinhaber: Hazet-Werk Hermann Zerver GmbH & Co. KG, D-42857 Remscheid (DE)
(72) Erfinder: Welp Peter, 42929 Wermelskirchen (DE); Piel Thomas, 51145 Köln (DE)
(74) Vertreter: Griepenstroh, Jörg

(56) Entgegenhaltungen:
- EP-A- 1 033 206
- EP-A- 1 477 279
- DE-A1- 19 808 909
- DE-B3- 10 261 000
- DE-B3- 10 361 597
- DE-C1- 10 109 752
- DE-U1- 29 819 740

## Beschreibung

Die Erfindung betrifft ein Greifelement für einen Federspanner gemäß den Merkmalen im Oberbegriff des Patentanspruchs 1 sowie einen Federspanner mit einem solchen Greifelement.

Die Montage und Demontage von Federbeinen von Kraftfahrzeugen erfolgt mit Hilfe von Federspannern. Federspanner bestehen aus einer stabförmigen Führung für zwei einander axial gegenüberliegende Greifelemente sowie aus einem Betätigungsmechanismus zum Bewegen von zumindest einem der Greifelemente entlang der axialen Führung. Auf Grund der zum Spannen erforderlichen hohen Kräfte muss gewährleistet werden, dass die Greifelemente die Enden der Schraubendruckfeder rutsch- und verdrehsicher halten, da ein Abrutschen der Schraubendruckfeder ein erhebliches Verletzungsrisiko darstellt.

Die DE 298 19 740 U1 offenbart hierzu ein erstes Greifelement für einen Federspanner zum Spannen von Schraubendruckfedern, mit einem zumindest annähernd kreisringförmig ausgebildeten Auflager zur axialen Abstützung einer an einer Kolbenstange eines Federbeins befestigten Federaufnahme, wobei ein mit dem Greifelement koppelbarer Zentriereinsatz vorgesehen ist, über welchen die Schraubendruckfeder verdrehsicher gegenüber dem Greifelement fixierbar ist.

Aus der EP 1 033 206 A2 geht ein erstes Greifelement für einen Federspanner zum Spannen von Schraubendruckfedern hervor, mit einem ringförmig ausgebildeten Auflager zur axialen Abstützung einer an einer Kolbenstange eines Federbeins befestigten Federaufnahme, wobei eine mit dem Greifelement koppelbare Bremsvorrichtung vorgesehen ist, über welchen die Schraubendruckfeder verdrehsicher gegenüber dem Greifelement fixierbar ist.

Die DE 198 08 909 A1 offenbart eine auswechselbare Schutzauflage aus einem gummiartigen, elastisch formstabilen Werkstoff für die Greifelemente eines Federspanners zum Spannen von Schraubendruckfedern, wobei ein Auflageabschnitt der Schutzauflage zumindest eine Auflagefläche des jeweiligen mit einer Federwindung der Schraubendruckfeder in Kontakt stehenden Greifelements abdeckt.

Die Schraubendruckfeder eines Federbeins ist einerseits an einem Federteller an dem Zylinder des Federbeins gelagert und zum anderen an einer Kopflagerplatte, die am Ende der Kolbenstange des Federbeins befestigt ist. Üblicherweise ist die Kopflagerplatte verdrehfest mit der Kolbenstange verbunden. Es gibt allerdings auch Federbeine, bei welchen die Kopflagerplatte frei drehbar gegenüber der Federaufnahme ist, über welche sich die Schraubendruckfeder an der Kopflagerplatte abstützt. Auf diese Weise kann das Federbein sowohl auf der linken als auch auf der rechten Seite des Kraftfahrzeugs verbaut werden.

Die drehbare Befestigung der Kopflagerplatte bringt jedoch Probleme beim Spannen der Schraubendruckfeder mit sich. Versuche haben gezeigt, dass die Schraubendruckfeder dazu neigt, sich beim Spannen mitzudrehen. Das Drehen an sich ist noch relativ unproblematisch, allerdings ist es möglich, dass die Schraubendruckfeder bereits ein erhebliches Stück gespannt worden ist und erst dann eine schlagartige Drehbewegung einsetzt, die zu einer Entspannung der Schraubendruckfeder führt. Wenn sich die Schraubendruckfeder beim Entspannen axial aus dem Verbund herauslöst, entsteht ein ganz erhebliches Unfallrisiko.

Hiervon ausgehend liegt der Erfindung die Aufgabe zu Grunde, ein Greifelement für einen Federspanner sowie einen Federspanner mit einem solchen Greifelement aufzeigen, bei welchem das Unfallrisiko durch plötzliches Entspannen der Schraubendruckfeder bedingt durch gegenseitiges Verdrehen der Federaufnahme gegenüber der Kopflagerplatte verringert ist.

Diese Aufgabe wird bei einem Greifelement mit den Merkmalen des Anspruchs 1 sowie bei einem Federspanner mit einem solchen Greifelement gemäß den Merkmalen des Patentanspruchs 12 gelöst.

Vorteilhafte Weiterbildungen sind Gegenstand der Unteransprüche.

Das erfindungsgemäße Greifelement für einen Federspanner zum Spannen von Schraubendruckfedern umfasst ein tellerförmiges Auflager zur Abstützung einer an einer Kolbenstange eines Federbeins befestigten Kopflagerplatte. Die Kopflagerplatte ist dabei frei drehbar gegenüber einer Federaufnahme des Federbeins gelagert, über welche sich die Schraubendruckfeder an der Kopflagerplatte abstützt. Bei derartigen Kopflagerplatten ist vorgesehen, dass dem Greifelement eine Bremsvorrichtung zugeordnet ist, über welche die Schraubendruckfeder verdrehsicher gegenüber dem Greifelement fixierbar ist.

Ein Drehen der Schraubendruckfeder kann dadurch unterbunden werden, dass einem der Greifelemente des Federspanners eine die Drehung der Schraubendruckfeder blockierende Bremsvorrichtung zugeordnet wird. Die Bremsvorrichtung dient einzig und allein der Verdrehsicherung der Schraubendruckfeder an einem die Kopflagerplatte des Federbeins aufnehmenden Greifelement und dient nicht zum Spannen der Schraubendruckfeder. Die Bremsvorrichtung ist nicht mit dem zweiten Greifelement des Federgeräts zu verwechseln, das in größerem Abstand zum ersten Greifelement angeordnet ist und welches zum Spannen der Schraubendruckfeder dient.

Das Bremsen oder Blockieren der Schraubendruckfeder erfolgt insbesondere dadurch, dass die kopfseitige Windung der Schraubendruckfeder gegen die Kopflagerplatte und damit gegen das Auflager des Greifelements verspannt wird. Auf diese Weise wird nicht nur die Schraubendruckfeder, sondern auch die Kopflagerplatte an einer Drehbewegung gehindert. Im praktischen Einsatz wird daher zuerst die Schraubendruckfeder durch die Bremsvorrichtung fixiert, bevor die Schraubendruckfeder gespannt wird.

In einer konkreten Ausgestaltung umfasst die Bremsvorrichtung eine Druckplatte, welche mit der zu spannenden Schraubendruckfeder in Eingriff bringbar und über Spannmittel in Richtung auf das Greifelement verlagerbar ist. Über die Druckplatte wird die erforderliche Kraft auf die Kopfwindung der Schraubendruckfeder ausgeübt, so dass diese fest an ihrer Kopflagerplatte und damit an dem tellerförmigen Auflager des Greifelements anliegt. Die Druckplatte kann über die Spannmittel, insbesondere in Form von Spannbolzen, unmittelbar mit dem Greifelement verschraubt sein. Diese Variante setzt voraus, dass dieses Greifelement nur mit einem bestimmten Typ von Schraubendruckfedern zum Einsatz kommt. Es wird jedoch angestrebt, möglichst universell einsetzbare Greifelemente für derartige Federbeine aufzuzeigen, wobei es als vorteilhaft angesehen wird, wenn der Druckplatte einer sich auf der gegenüberliegenden Seite des Greifelements abstützende Jochplatte zugeordnet ist, die über Schraubbolzen mit der Druckplatte verspannbar ist. Die Jochplatte und die Druckplatte bilden gewissermaßen eine Brücke, die dem Greifelement lösbar zugeordnet ist. Das Greifelement dient dabei als Widerlager für die Jochplatte und diese wiederum als Widerlager für die Druckplatte.

Um einen möglichst langen Spannweg des Federspanners sicherzustellen, ist die Druckplatte so zu platzieren, dass möglichst nur die kopflagerplattenseitige Windung, d.h. die Kopfwindung der Schraubendruckfeder von der Druckplatte übergriffen ist. Da das Ende der Schraubendruckfeder jedoch in unterschiedlicher Winkellage zur Kopflagerplatte liegen kann, ist es zweckmäßig, wenn die Jochplatte über Formschlussmittel gegenüber dem Greifelement ebenfalls in unterschiedlichen Winkellagen (bezogen auf die Längsachse der Schraubenfeder) lageorientierbar ist. Dadurch kann auch die Druckplatte in unterschiedlichen Winkellagen gegenüber der Schraubenfeder positioniert werden, so dass der Spannweg des Federspanners durch die zusätzliche Bremsvorrichtung nur minimal eingeschränkt wird.

Voraussetzung für die Fixierung der Jochplatte in unterschiedlichen Winkellagen ist, dass die Jochplatte und/oder das Greifelement entsprechende Formschlussmittel aufweisen oder über geeignete Formschlussmittel miteinander koppelbar sind. Als besonders zweckmäßig wird es angesehen, wenn das Greifelement ein Bohrmuster aufweist, beispielsweise in Form von gleichmäßig über den Umfang des Greifelements verteilten Bohrungen, in welche Formschlussmittel zur Lageorientierung der Lochplatte einsetzbar sind. Bei den Formschlussmitteln kann es sich um Sicherungsstifte oder auch um Schraubbolzen handeln, über welche die Jochplatte in der gewünschten Lage an dem Greifelement fixierbar ist.

Es wird als zweckmäßig angesehen, wenn in das Greifelement austauschbare Zentriereinsätze zur Zentrierung der Kopflagerplatte einsetzbar sind. Selbstverständlich ist es auch denkbar, eine auf einen speziellen Kopfplattentyp abgestimmte Zentrierung vorzusehen, die unmittelbar an dem Greifelement ausgebildet oder von diesem gebildet sein kann. Die Austauschbarkeit der Zentriereinsätze gewährleistet allerdings, dass das Greifelement für Federbeine mit unterschiedlichen Kopflagerplatten zum Einsatz kommen kann.

Die Zentriereinsätze haben nicht nur die Funktion, die Kopflagerplatte zentrisch gegenüber dem Greifelement auszurichten, vielmehr können die Zentriereinsätze gleichzeitig als Verdrehsicherung für unrunde Kopflagerplatten dienen. Zwar geht von einer Drehung der Kopflagerplatte anders als von der Drehung der Schraubendruckfeder keine Gefahr aus, allerdings trägt die zusätzliche Verdrehsicherung für die Kopflagerplatte im Ergebnis auch dazu bei, dass sich die Schraubendruckfeder nicht gegenüber dem Greifelement drehen kann.

Zur Schonung der Federwindungen und zur Erhöhung der Haftreibung ist vorgesehen, dass die Druckplatte zumindest in denjenigen Bereichen, in denen sie mit der Feder in Eingriff gelangt, eine den Reibwert erhöhende Gummierung aufweist.

Die Druckplatte selbst kann auf unterschiedliche Arten hergestellt sein. Es kann sich bei der Druckplatte um ein durch spanende Umformung hergestelltes Bauteil oder durch spanlose Umformung hergestelltes Schmiedebauteil handeln oder auch um ein Blechbauteil, das im Tiefziehverfahren mit entsprechend ausgesteiften Rändern oder Versteifungsrippen versehen ist. Selbstverständlich ist es auch möglich, die Druckplatte als mehrteilige Schweißkonstruktion zu konfigurieren, wobei derjenige Abschnitt der Druckplatte, der die Spannmittel aufnehmen muss, beispielsweise eine höhere Wandstärke aufweisen kann als derjenige Bereich, der unmittelbar mit der Schraubendruckfeder in Eingriff gelangt ist. Maßgeblich für die Konfiguration der Druckplatte ist letztendlich das für einen Konstrukteur angestrebte Optimum zwischen sparsamem Materialeinsatz, wirtschaftlicher Herstellung und optimaler Betriebssicherheit.

Die Erfindung wird nachfolgend anhand der in den schematischen Zeichnungen dargestellten Ausführungsbeispiele näher erläutert. Es zeigen:
- Figur 1: eine Seitenansicht eines Federbeins mit angesetzten Greifelementen;
- Figur 2: einen Teilbereich des Federbeins der Figur 1 in perspektivischer Ansicht;
- Figur 3: eine Explosionsdarstellung eines Greifelements mit Anbauteilen;
- Figur 4: das Greifelement der Figur 1 vor der Montage einer Druckplatte;
- Figur 5: das Greifelement der Figur 1 mit montierter Bremsvorrichtung;
- Figur 6: in der Darstellungsweise der Figur 5 die Bremsvorrichtung im Eingriff mit einer Schraubendruckfeder und mit der Kopfflanschplatte des Federbeins;
- Figur 7: eine perspektivische Darstellung der Rückseite des Greifelements;
- Figur 8: eine weitere perspektivische Darstellung des Greifelements mit der Bremsvorrichtung im Eingriff mit der Schraubendruckfeder und
- Figur 9: fünf unterschiedliche Arten von Druckplatten der Bremsvorrichtung.

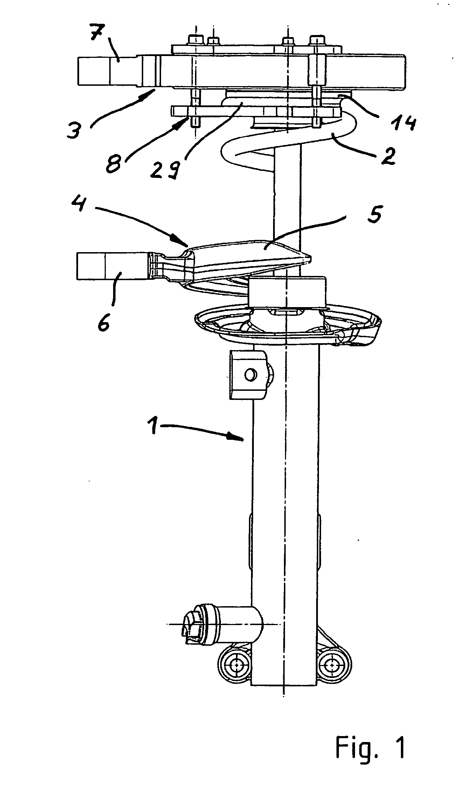

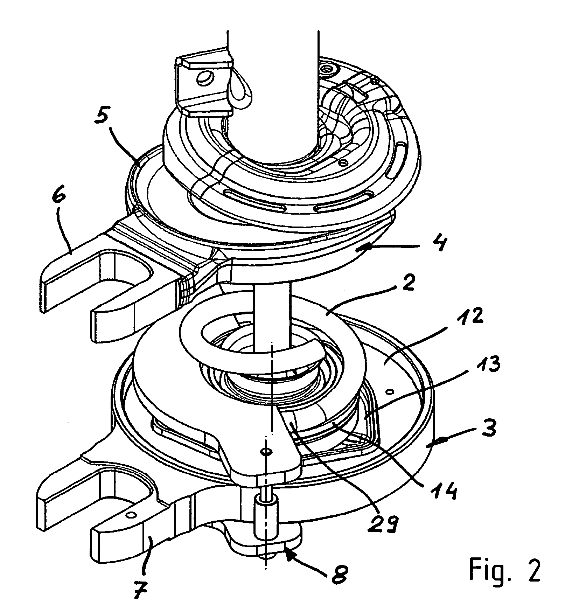

Figur 1 zeigt in einer Seitenansicht ein Federbein 1 eines nicht der dargestellten Personenkraftwagns. Die Schraubendruckfeder 2 des Federbeins 1 kann über Greifelemente 3, 4 eines nicht weiter im Detail dargestellten Teleskopfederspanners gespannt werden. Bei diesem Ausführungsbeispiel ist das in der Bildebene der Figur 1 untere Greifelement 4 mit einem gabelförmigen Greifabschnitt 5 versehen, der mit der Schraubendruckfeder 2 im Eingriff steht. Das obere Greifelement 3 ist tellerförmig konfiguriert und dient zur Aufnahme einer Kopfflanschplatte 13 des Federbeins 1, wie sie in Figur 2 zu erkennen ist. Darüber hinaus wird in Figur 2 deutlich, wie die Greifelemente 3, 4 jeweils über gabelförmige Kupplungselemente 6, 7 mit einem parallel zum Federbein 1 platzierbaren Federspanner kuppelbar sind, um die Greifelemente 3, 4 relativ zueinander zu bewegen.

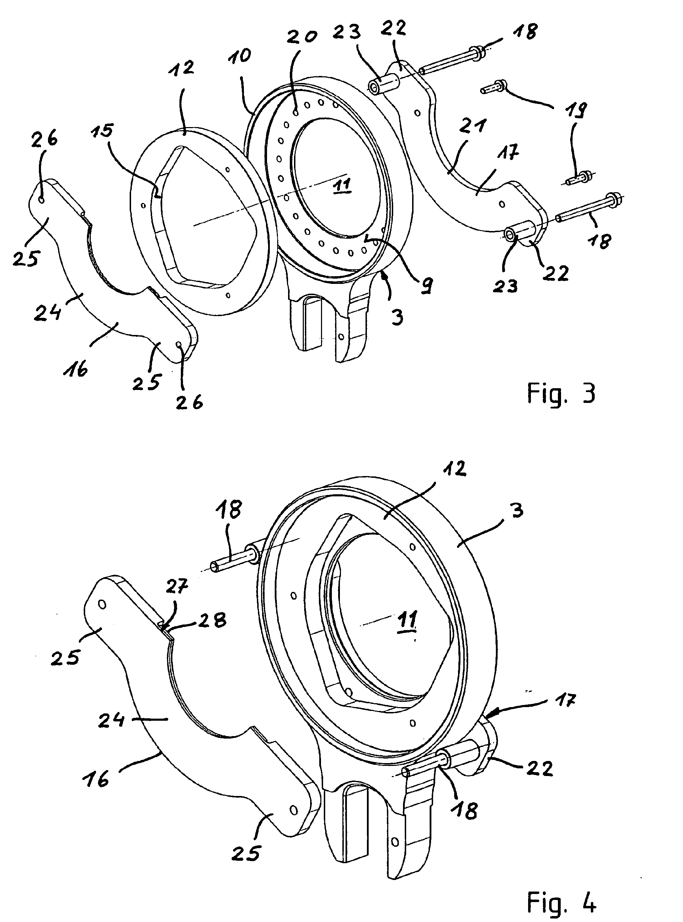

Das Wesentliche bei der Erfindung ist die Konfiguration des kopflagerplattenseitigen Greifelements 3 und einer daran befestigten Bremsvorrichtung 8. Am deutlichsten wird der Aufbau des Greifelements 3 und der Bremsvorrichtung 8 anhand der Figuren 3 und 4.

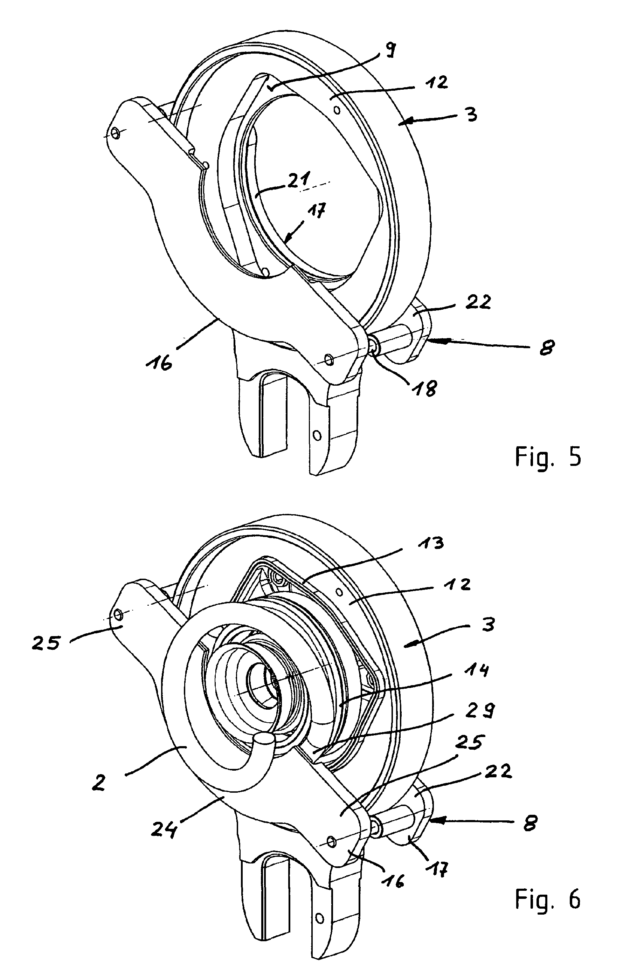

In Figur 3 ist erkennbar, dass das Greifelement 3 ein tellerförmiges, also ebenes, rundes Auflager 9 mit einem axial vorstehenden, außen umlaufenden Rand 10 umfasst. Das Auflager 9 ist ringförmig konfiguriert und umgibt eine zentrale Öffnung 11. Auf das Auflager 9 wird ein austauschbarer Zentriereinsatz 12 gelegt, der von dem Rand 10 in dem Greifelement 3 zentriert wird. Der Zentriereinsatz 12 bedeckt dabei nicht das gesamte Auflager 9, wie anhand der Figuren 4 und 5 zu erkennen ist. Der Zentriereinsatz 12 dient zur Zentrierung der Kopflagerplatte 13 des Federbeins 1, wie sie in den Figuren 2 und 6 eingezeichnet ist. Die Kopflagerplatte 13 stützt sich während des Spannens direkt an dem Auflager 9 ab und wird durch den Zentriereinsatz 12 lediglich umfangseitig zentriert. Die Kopflagerplatte 13 ist drehbar gegenüber einer Federaufnahme 14 gelagert, so dass durch den Zentriereinsatz 12 nicht nur eine axiale Ausrichtung der Kopflagerplatte 13 gegenüber dem Greifelement 3 erfolgt, sondern zudem auch eine Verdrehsicherung. Dies ist möglich, weil die Kopflagerplatte 13 in diesem Ausführungsbeispiel eine unrunde, dreieckähnliche Außenkontur besitzt. Dementsprechend besitzt der Zentriereinsatz 12 ebenso eine unrunde an die Kopflagerplatte 12 angepasste Ausnehmung 15, welche den Außenrand der Kopflagerplatte 13 formschlüssig umgibt.

Eine zusätzliche Fixierung der Schraubendruckfeder 2 an dem Greifelement 3 erfolgt über die Bremsvorrichtung 8, welche in diesem Ausführungsbeispiel eine Druckplatte 16 und eine mit der Druckplatte 16 zusammenwirkende Jochplatte 17 umfasst.

Wie anhand der Figur 6 zu erkennen ist, gelangt die Druckplatte 16 in der Einbaulage mit der Schraubendruckfeder 2 in Eingriff und wird über die Jochplatte 17 gehalten. Die Druckplatte 16 und die Jochplatte 17 sind über Spannmittel 18 in Form von zwei Schraubbolzen miteinander verschraubbar (Figur 5). Hierzu wird die Jochplatte 17 über Formschlussmittel 19 in Form von zwei kleineren Schrauben gegenüber dem Greifelement 3 lagerorientiert. Zu diesem Zweck ist in dem Auflager 9 des Greifelements 3 ein Bohrmuster 20 vorgesehen. In diesem Ausführungsbeispiel handelt es sich um 24 kreisförmig angeordnete und gleichmäßig über den Umfang des Auflagers 9 verteilte Bohrungen.

Die größeren Schraubbolzen, d. h. die Spannmitteil 18 zum Verbinden der Druckplatte 16 mit der Jochplatte 17, werden außen am Rand 10 des Greifelements 3 vorbeigeführt. Das heißt, die Druckplatte 16 und die Jochplatte 17 erstrecken sich seitlich über dem Umfang des Greifelements 3 hinaus. Die Jochplatte 17 ist dabei derart konfiguriert, dass sie nicht in den Bereich der Öffnung 11 hineinragt. Dazu besitzt die Jochplatte 17 einen an den Verlauf des Auflagers 9 angepassten Bogenabschnitt 21, an den sich endseitig zwei nach außen weisende Schenkel 22 anschließen, die mit dem Bogenabschnitt 21 in einer Ebene liegen und welche von den Spannmitteln 18 durchsetzt werden. An den Schenkeln 22 sind zudem in Richtung zur Druckplatte 16 weisende Führungshülsen 23 befestigt.

Auch die Druckplatte 16 besitzt einen Bogenabschnitt 24, der quasi gabelförmig mit der Schraubendruckfeder 2 in Eingriff gelangt. Der Bogenabschnitt 24 der Druckplatte 16 ist auch deshalb erforderlich, damit die Druckplatte 16 nicht mit der Kolbenstange 14 und Anbauteilen der Kolbenstange 14 kollidiert. Ebenso wie die Jochplatte 17 schließen sich auch bei der Druckplatte 16 an den Bogenabschnitt 24 jeweils nach außen weisende Schenkel 25 an, welche mit den Schenkeln 22 der Jochplatte 17 fluchten und Gewindeaufnahmen 26 zum Verschrauben mit der Jochplatte 17 aufweisen. Auch die Druckplatte 16 ist als ebenes, flaches Bauteil konfiguriert und besitzt lediglich in dem Bereich des Bogenabschnitts 24 eine taschenförmige Ausnehmung 27, die für den Eingriff der Schraubendruckfeder 2 vorgesehen ist. Durch die Ausnehmung 27 besitzt die als flaches Bauteil ausgeführte Druckplatte 16 einen Rand, welcher die Positionierung gegenüber der Schraubendruckfeder 2 vereinfacht. Im Bereich dieser Ausnehmung 27 ist eine den Reibwert erhöhende Gummierung 28 vorgesehen, die nicht nur dazu beiträgt Relativverlagerungen der Schraubendruckfeder 2 gegenüber der Bremsvorrichtung, d. h. insbesondere gegenüber der Druckplatte 16 zu verhindern, sondern darüber hinaus auch die Windungen der Schraubendruckfeder 2 vor Beschädigungen schützt.

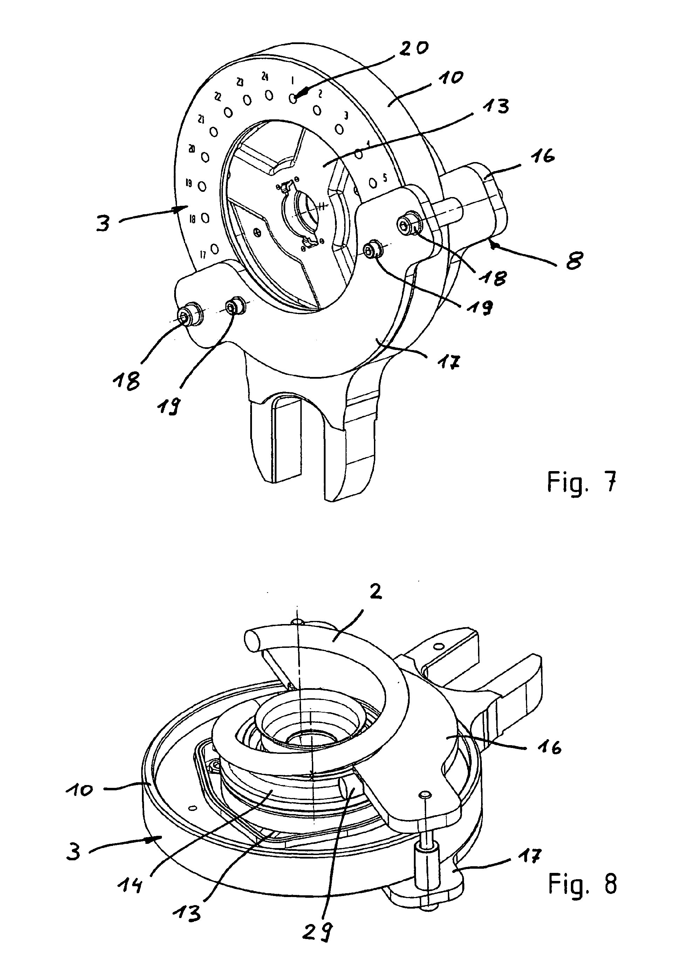

Die Druckplatte 16 ist möglichst flach konfiguriert, um den Spannbereich des Federspanners so wenig wie möglich einzuschränken. Anhand der Figur 8 ist zu erkennen, dass die Druckplatte 16 der Bremsvorrichtung 8 so nah wie möglich am Ende einer Kopfwindung 29 der Schraubendruckfeder 2 positioniert ist, um nur die Kopfwindung 29 gegen das Greifelement 3 zu pressen und um auf diese Weise ein Verdrehen der Schraubendruckfeder 2 gegenüber der Kopflagerplatte 13 bzw. dem Greifelement 3 zu verhindern. Das Spannen der Schraubendruckfeder 2 erfolgt nicht über die Bremsvorrichtung 8, sondern ausschließlich über die relativ zueinander verlagerbaren Greifelemente 3, 4.

Anhand der Figur 7 ist zu erkennen, dass die Bremsvorrichtung 8 über das gekennzeichnete Bohrmuster 20 in definierter Weise in unterschiedlichen Relativlagen gegenüber dem Greifelement 3 fixierbar ist. In diesem Fall sind die einzelnen Bohrungen des Bohrmusters durchnummeriert, um dem Monteur eine Hilfestellung zu geben, wie die Jochplatte 17 der Bremsvorrichtung 8 exakt anzubringen ist. Die in Figur 7 dargestellte Position der Bremsvorrichtung 8 ist lediglich ein Beispiel.

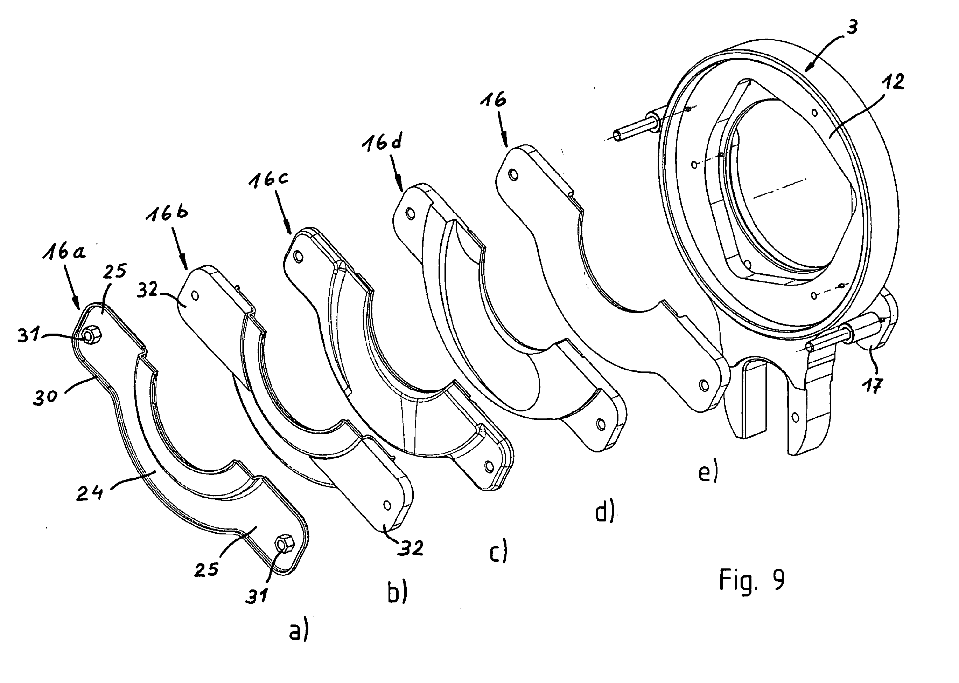

Figur 9 zeigt fünf unterschiedliche Ausführungsformen von Druckplatten, die alternativ zum Einsatz kommen können. Die Druckplatte 16a ist als Blechbauteil konfiguriert, dass aus relativ dünnem Blech im Tiefziehverfahren hergestellt ist. Die Druckplatte 16a erhält ihre Steifigkeit durch einen im Umformverfahren ausgestellten umlaufenden Kragen 30. Schweißmuttem 31 im Bereich der Schenkel 25 ermöglichen trotz der geringen Materialstärke ein Verschrauben über Schraubbolzen. Der Bogenabschnitt 24 ist bei dieser Ausführungsform zweistufig konfiguriert, wobei die Ausnehmung 27 zur Aufnahme der Kopfwindung 29 der Schraubendruckfeder 2 ein in Axialrichtung vorstehender Absatz ist, in welchem wiederum eine Gummierung 28 angeordnet ist. Insgesamt baut diese Variante der Druckplatte 16 sehr leicht.

Die mit b) bezeichnete Variante einer Druckplatte 16b unterscheidet sich von der vorgehenden dadurch, dass als Schenkel 22 separate Schenkelstücke 32 aus einem Material größerer Wanddicke angesetzt sind. Es handelt sich hierbei um eine Schweißkonstruktion, welche kostengünstig in der Fertigung ist und gleichzeitig ein geringes Gewicht aufweist.

Die dritte alternative gemäß der Abbildung c) zeigt eine Druckplatte 16c, in Form eines Schmiedestücks, das im Wesentlichen durch spanlose Umformung einstückig hergestellt ist.

Ein weiteres Beispiel einer spanabhebend bearbeiteten Druckplatte 16d zeigt Abbildung d). Bei dieser Variante ist die Konturgebung ähnlich wie bei der Variante in Abbildung c), das heißt es ist eine wendelförmige Auflagerfläche vorhanden, damit die gestauchte Schraubendruckfeder möglichst nicht verkantet, sondern möglichst gleichmäßig mit der Druckplatte 16d in Kontakt gelangt.

Die Druckplatte in der Variante d) entspricht derjenigen in den Figuren 1-8 und ist durch eine Fräsbearbeitung hergestellt.

### Bezugszeichen:

| | |
|---|---|
| 1 - | Federbein |
| 2 - | Schraubendruckfeder |
| 3 - | Greifelement |
| 4 - | Greifelement |
| 5 - | Greifabschnitt |
| 6 - | Kupplungselement |
| 7 - | Kupplungselement |
| 8 - | Bremsvorrichtung |
| 9 - | Auflager |
| 10 - | Rand |
| 11 - | Öffnung |
| 12 - | Zentriereinsatz |
| 13 - | Kopflagerplatte |
| 14 - | Federaufnahme |
| 15 - | Ausnehmung |
| 16 - | Druckplatte |
| 16a - | Druckplatte |
| 16b - | Druckplatte |
| 16c - | Druckplatte |
| 16d - | Druckplatte |
| 17 - | Jochplatte |
| 18 - | Spannmittel |
| 19 - | Formschlussmittel |
| 20 - | Bohrmuster |
| 21 - | Bogenabschnitt |
| 22 - | Schenkel |
| 23 - | Führungshülse |
| 24 - | Bogenabschnitt |
| 25 - | Schenkel |
| 26 - | Gewindeaufnahme |
| 27 - | Ausnehmung |
| 28 - | Gummierung |
| 29 - | Kopfwindung |
| 30 - | Kragen |
| 31 - | Schweißmutter |
| 32 - | Schenkelstück |

## Patentansprüche

1. Greifelement für einen Federspanner zum Spannen von Schraubendruckfedern, mit einem tellerförmigen Auflager (9) zur Abstützung einer an einer Kolbenstange eines Federbeins (1) befestigten Kopflagerplatte (13), welche frei drehbar gegenüber einer Federaufnahme (14) ist, über welche sich die Schraubendruckfeder (2) an der Kopflagerplatte (13) abstützt, wobei eine mit dem Greifelement (3) koppelbare Bremsvorrichtung (8) vorgesehen ist, über welche die Schraubendruckfeder (2) verdrehsicher gegenüber dem Greifelement (3) fixierbar ist.

2. Greifelement nach Anspruch 1, **dadurch gekennzeichnet, dass** die Bremsvorrichtung (8) eine Druckplatte (16, 16a, 16b, 16c, 16d) umfasst, welche mit der zu spannenden Schraubendruckfeder (2) in Eingriff bringbar und über Spannmittel (18) in Richtung auf das Greifelement (3) verlagerbar ist.

3. Greifelement nach Anspruch 2, **dadurch gekennzeichnet, dass** der Druckplatte (16, 16a, 16b, 16c, 16d) eine sich auf der gegenüberliegenden Seite des Greifelements (3) abstützende Jochplatte (17) zugeordnet ist, welche über Schraubbolzen mit der Druckplatte (16, 16a, 16b, 16c, 16d) verspannbar ist.

4. Greifelement nach einem der Ansprüche 1 bis 3, **dadurch gekennzeichnet, dass** die Jochplatte (17) über Formschlussmittel (19) gegenüber dem Greifelement (16, 16a, 16b, 16c, 16d) in unterschiedlichen Winkellagen bezogen auf die Längsachse der Schraubenfeder (2) lageorientierbar ist.

5. Greifelement nach Anspruch 4, **dadurch gekennzeichnet, dass** das Auflager (9) mit einem Bohrmuster (20) versehen ist, zur Aufnahme der Formschlussmittel (19) zur Lageorientierung der Jochplatte (17).

6. Greifelement nach einem der Ansprüche 1 bis 5, **dadurch gekennzeichnet, dass** in das Greifelement (3) austauschbare Zentriereinsätze (12) zur Zentrierung der Kopflagerplatte (13) einsetzbar sind.

7. Greifelement nach Anspruch 6, **dadurch gekennzeichnet, dass** der Zentriereinsatz (12) über Formschlussmittel gegenüber dem Greifelement (3) in unterschiedlichen Winkellagen bezogen auf die Längsachse der Schraubenfeder (2) lageorientierbar ist.

8. Greifelement nach einem der Ansprüche 1 bis 7, **dadurch gekennzeichnet, dass** die Druckplatte (16, 16a, 16b, 16c, 16d) eine den Haftreibwert erhöhende Gummierung (20) aufweist.

9. Greifelement nach einem der Ansprüche 1 bis 8, **dadurch gekennzeichnet, dass** die Druckplatte (16a, 16c) ein durch spanlose Umformung hergestelltes Schmiedebauteil oder Blechbauteil ist.

10. Greifelement nach einem der Ansprüche 1 bis 8, **dadurch gekennzeichnet, dass** die Druckplatte (16b) als Schweißkonstruktion ausgeführt ist.

11. Greifelement nach einem der Ansprüche 1 bis 8, **dadurch gekennzeichnet, dass** die Druckplatte (16, 16d) durch spanabhebende Bearbeitung hergestellt ist.

12. Federspanner, mit einem Spannantrieb mit integrierter Gewindespindel und mit einem Greifelement (3) gemäß den Merkmalen eines der vorhergehenden Patentansprüche.

## Claims

1. A gripping element for a spring compressor for compressing helical compression springs having a plate-shaped support (9) for supporting a head bearing plate (13) fastened to a piston rod of a suspension strut (1), which head bearing plate is freely rotatable relative to a spring receptacle (14), via which the helical compression spring (2) rests on the head bearing plate (13), wherein a braking device (8) couplable with the gripping element (3) is provided, via which the helical compression spring (2) may be non-rotatably immobilised relative to the gripping element (3).

2. A gripping element according to claim 1, **characterised in that** the braking device (8) comprises a pressure plate (16, 16a, 16b, 16c, 16d) which may be brought into engagement with the helical compression spring (2) to be compressed and may be displaced via compression means (18) towards the gripping element (3).

3. A gripping element according to claim 2, **characterised in that** the pressure plate (16, 16a, 16b, 16c, 16d) is associated with a yoke plate (17) which is supported on the opposite side of the gripping element (3), which yoke plate may be clamped together with the pressure plate (16, 16a, 16b, 16c, 16d) via studs.

4. A gripping element according to any one of claims 1 to 3, **characterised in that** the yoke plate (17) may be oriented via clamping means (19) relative to the gripping element (16, 16a, 16b, 16c, 16d) in different angular positions relative to the longitudinal axis of the helical spring (2).

5. A gripping element according to claim 4, **characterised in that** the support (9) is provided with a drilled pattern (20) for accommodating the clamping means (19) for orienting the yoke plate (17).

6. A gripping element according to any one of claims 1 to 5, **characterised in that** interchangeable centring inserts (12) may be inserted into the gripping element (3) for centring the head bearing plate (13).

7. A gripping element according to claim 6, **characterised in that** the centring insert (12) may be oriented via clamping means relative to the gripping element (3) in different angular positions relative to the longitudinal axis of the helical spring (2).

8. A gripping element according to any one of claims 1 to 7, **characterised in that** the pressure plate (16, 16a, 16b, 16c, 16d) comprises a rubber coating (20) which increases the coefficient of static friction.

9. A gripping element according to any one of claims 1 to 8, **characterised in that** the pressure plate (16a, 16c) is a forged or sheet metal component produced by chipless forming.

10. A gripping element according to any one of claims 1 to 8, **characterised in that** the pressure plate (16b) is constructed as a welded part.

11. A gripping element according to any one of claims 1 to 8, **characterised in that** the pressure plate (16, 16d) is produced by machining.

12. A spring compressor having a clamping actuator with integrated threaded spindle and having a gripping element (3) according to the features of one of the preceding claims.

## Revendications

1. Elément de prise pour un compresseur de ressort pour tendre des ressorts de compression, avec un support (9) en forme de coupelle pour l'appui d'une plaque de support de tête (13) fixée sur une tige de piston d'une jambe de force à ressort (1), qui peut tourner librement par rapport à un logement de ressort (14), par lequel le ressort de pression cylindrique (2) s'appuie contre la plaque de support de tête (13), un dispositif de freinage (8) pouvant être couplé à l'élément de prise (3) étant prévu, par lequel le ressort de compression (2) peut être fixé sans pouvoir tourner par rapport à l'élément de prise (3).

2. Elément de prise selon la revendication 1, **caractérisé en ce que** le dispositif de freinage (8) comporte un plateau de compression (16, 16a, 16b, 16c, 16d) qui peut être amené en engagement avec le ressort de compression (2)à tendre et peut être déplacée par des moyens tendeurs (18) en direction de l'élément de prise (3).

3. Elément de prise selon la revendication 2, **caractérisé en ce qu'**une plaque d'étrier (17) s'appuyant sur le côté opposé de l'élément de prise (3), qui peut être serrée par des boulons filetés au plateau de compression (16, 16a, 16b, 16c, 16d) est associée au plateau de compression (16, 16a, 16b, 16c, 16d).

4. Elément de prise selon l'une quelconque des revendications 1 à 3, **caractérisé en ce que** la plaque d'étrier (17) peut être orientée par des moyens d'accouplement mécanique (19) par rapport à l'élément de prise (16, 16a, 16b, 16c, 16d) dans différentes positions angulaires par rapport à l'axe longitudinal du ressort cylindrique (2).

5. Elément de prise selon la revendication 4, **caractérisé en ce que** le support (9) est pourvu d'un perçage (20) pour la réception des moyens à accouplement mécanique (19) en vue de l'orientation de la position de la plaque d'étrier (17).

6. Elément de prise selon l'une quelconque des revendications 1 à 5, **caractérisé en ce que** des inserts de centrage (12) échangeables peuvent être insérés dans l'élément de prise (3) pour le centrage de la plaque d'appui de tête (13).

7. Elément de prise selon la revendication 6, **caractérisé en ce que** l'insert de centrage (12) peut être orienté par des moyens à accouplement mécanique (19) par rapport à l'élément de prise (3) dans différentes positions angulaires par rapport à l'axe longitudinal du ressort cylindrique (2).

8. Elément de prise selon l'une quelconque des revendications 1 à 7, **caractérisé en ce que** le plateau de compression (16, 16a, 16b, 16c, 16d) présente une surface en caoutchouc (20) augmentant le coefficient d'adhérence.

9. Elément de prise selon l'une quelconque des revendications 1 à 8, **caractérisé en ce que** le plateau de compression (16a, 16c) est une pièce forgé ou une pièce en tôle fabriqué par formage sans enlèvement de copeaux.

10. Elément de prise selon l'une quelconque des revendications 1 à 8, **caractérisé en ce que** le plateau de compression (16b) est réalisée en tant qu'ensemble soudé.

11. Elément de prise selon l'une quelconque des revendications 1 à 8, **caractérisé en ce que** le plateau de compression (16, 16d) est fabriquée par usinage avec enlèvement de copeaux.

12. Compresseur de ressort avec un entraînement de tension avec une broche filetée intégrée et avec un élément de prise (3) selon les caractéristiques de l'une quelconque des revendications précédentes.
